# EUROPÄISCHE PATENTSCHRIFT

(11) **EP 2 153 372 B1**
(45) Veröffentlichungstag und Bekanntmachung des Hinweises auf die Patenterteilung: **02.01.2013**
(21) Anmeldenummer: 08749750.9
(22) Anmeldetag: 25.04.2008
(51) Int. Cl.: G06K 7/00, G11B 17/00, G07C 5/08

(54) **ELEKTRISCHES GERÄT MIT EINER DATENTRÄGERVERRIEGELUNGSEINRICHTUNG UND VERFAHREN ZUM ENTRIEGELN EINES DATENTRÄGERS**
ELECTRICAL DEVICE HAVING A DATA CARRIER LOCKING DEVICE AND METHOD FOR UNLOCKING A DATA CARRIER
APPAREIL ELECTRIQUE MUNI D'UN SYSTEME DE VERROUILLAGE POUR SUPPORT DE DONNEES ET PROCEDE DE DEVERROUILLAGE D'UN SUPPORT DE DONNEES

(30) Priorität: 25.05.2007 DE 102007024729
(43) Veröffentlichungstag der Anmeldung: 17.02.2010
(73) Patentinhaber: Continental Automotive GmbH, 30165 Hannover (DE)
(72) Erfinder: WAHLER, Torsten, 78073 Bad Dürrheim (DE)
(86) Internationale Anmeldenummer: PCT/EP2008/055095
(87) Internationale Veröffentlichungsnummer: WO 2008/145465

(56) Entgegenhaltungen:
- DE-U1- 20 018 694
- US-A1- 2001 021 155
- US-A1- 2004 062 173
- US-A1- 2005 034 138
- US-A1- 2005 114 875

## Beschreibung

Elektrisches Gerät mit einer Datenträgerverriegelungseinrichtung und verfahren zum Entriegeln eines Datenträgers

Die Erfindung bezieht sich auf ein elektrisches Gerät, insbesondere Einbaugerät für ein Fahrzeug, mit einem Gehäuse und mit einer in dem Gehäuse angeordneten Datenträgeraufnahmevorrichtung, wobei die Datenträgeraufnahmevorrichtung eine Datenträgerverriegelungseinrichtung zum Verriegeln eines in der Datenträgeraufnahmevorrichtung angeordneten Datenträgers aufweist. Außerdem bezieht sich die Erfindung auf ein Verfahren zum Entriegeln eines in einer eine Datenträgerverriegelungseinrichtung aufweisenden Datenträgeraufnahmevorrichtung verriegelten Datenträgers in einem oben genannten elektrischen Gerät mit einem eine Gehäuseausnehmung und einen Gehäuseausnehmungsverschluss aufweisenden Gehäuse.

Ein Gerät und ein Verfahren cer vorgenannten Art sind bekannt von einem als digitaler Fahrtschreiber für ein Kraftfahrzeug ausgebildeten elektrischen Gerät. Dabei werden fahrerspezifische Datenkarten als Datenträger verwendet; ein Austausch von fahrer- und/oder fahrzeugspezifischen Daten zwischen einer Datenkarte und dem Gerät sowie eine Aufzeichnung von Daten auf der Datenkarte kann dann erfolgen, wenn sich die Datenkarte eines Fahrers des Kraftfahrzeugs in der Datenträgeraufnahmevorrichtung befindet. Um unerlaubte Eingriffe in den Fahrtschreiber erkennen zu können, ist das Gehäuse verplombt und gegebenenfalls mit einer einen Gehäuseöffnungsschalter aufweisenden Offnungserkennung versehen. Weiterhin ist die Datenträgerverriegelungseinrichtung der Datenträgeraufnahmevorrichtung vorgesehen, um ein beabsichtigtes oder unbeabsichtigtes Entnehmen der Datenkarte aus der Datenträgeraufnahmevorrichtung während des Betriebs des Fahrtschreibers und somit eine Datenbeschädigung und/oder Datenmanipulation zu vermeiden und zu verhindern. Liegt eine Betriebsstörung, zum Beispiel ein Ausfall der elektrischen Energieversorgung oder ein Totalausfall des Geräts, vor, so ist es zur Entnahme der Datenkarte aus dem Fahrtschreiber erforderlich, das Gehäuse zu öffnen, wodurch die Plombierung beschädigt und/oder der Gehäuseöffnungsschalter ein Fehlersignal aussendend betätigt wird.

Aus DE 200 18 694 U1 ist eine Aufnahmevorrichtung für Datenkarten mit einem die Datenkarten führenden Kartenhalter und mit dem Kartenhalter zugeordneten, bei einem Eingeben einer Datenkarte in die Aufnahmevorrichtung mittels der Datenkarte betätigbaren Verriegelungsmitteln sowie mit Auswurfmitteln bekannt. Dabei ist ein schwenkbares Schließelement, welches mit einer in einem Steuerschieber ausgebildeten Kulisse zusammenwirkt, vorgesehen.

Aufgabe der Erfindung ist es, ein Gerät der eingangs genannten Art zu schaffen, aus welchem der verriegelte Datenträger auch im Falle einer Betriebsstörung ohne Öffnung des Gehäuses entnommen werden kann. Außerdem ist es Aufgabe der Erfindung, ein Verfahren der eingangs genannten Art anzugeben, welches ein Entriegeln des Datenträgers ohne Öffnung des Gehäuses ermöglicht.

Die erstgenannte Aufgabe wird bei einem Gerät der eingangs genannten Art erfindungsgemäß gelöst mit der Gesamtheit der Merkmale des Anspruchs 1.

Vorzugsweise handelt es sich bei dem erfindungsgemäßen Gerät um ein Einbaugerät in ein Kraftfahrzeug, für welches Einbaugerät ein besonders hoher Schutz vor unerlaubten Eingriffen in das Gerät erforderlich ist; insbesondere ist das Gerät ein Fahrtschreiber oder ein Mautgerät für ein Kraftfahrzeug, allgemein handelt es sich vorzugsweise um ein Datenerfassungsgerät für ein Kraftfahrzeug. Von besonderem Vorteil ist bei der Erfindung, dass nicht das Gehäuse geöffnet werden muss, um den Datenträger zu entriegeln, sondern dass hierfür lediglich ein Öffnen einer räumlich sehr begrenzten Gehäuseausnehmung, bei der es sich zum Beispiel um eine Gehäuseausstanzung oder eine Gehäusebohrung handeln kann, erforderlich ist. Auf diese

Weise wird weder ein Verplombung des Gehäuses beschädigt noch wird ein Gehäuseöffnungsschalter betätigt. Wichtig ist bei der Erfindung, dass dennoch - das heißt ohne Beschädigung der Verplombung oder Betätigung des Gehäuseöffnungsschalters - ein Eingriff in das Gehäuse erkennbar ist: Dies ist deswegen der Fall, weil der Gehäuseausnehmungsverschluss lediglich nicht wiederverschließbar von der Gehäuseausnehmung diese öffnend entfernbar ist. Die Gehäuseausnehmung bleibt nach dem Öffnen somit offen oder sie wird anderweitig, jedenfalls jedoch nicht ohne erkennbare Beschädigung mit dem Gehäuseausnehmungsverschluss, wieder verschlossen; beides - also eine offene Gehäuseausnehmung und ein beschädigter Gehäuseausnehmungsverschluss - ist durch einfache Inaugenscheinnahme des erfindungsgemäßen Gerätes erkennbar. Der Gehäuseausnehmungsverschluss ist zum ausschließlich einmaligen Öffnen der Gehäuseausnehmung vorgesehen. Mit der Erfindung kann vorteilhaft der Datenträger aus dem Gerät entnommen werden ohne dass ein Gehäuseteil abgebaut werden muss. Vorzugsweise ist ein Entriegeln des Datenträgers ausschließlich in einem stromlosen Zustand des erfindungsgemäßen Geräts ermöglicht. Aus dem erfindungsgemäßen Gerät kann bei einer Betriebsstörung der Datenträger entriegelt und entnommen werden ohne eine Plombierung des Gehäuses zu zerstören oder ein Gehäusebauteil wie zum Beispiel ein Bodenblech zu entfernen. Das ist insbesondere bei einem Fahrtschreiber für ein Kraftfahrzeug von erheblichem Vorteil, da der dort verwendete Datenträger personenbezogen ist und von einem Kraftfahrer des Kraftfahrzeugs bei Ausübung seiner Tätigkeit, zum Beispiel auch in einem anderen Kraftfahrzeug, verwendet werden muss. Andernfalls können - abhängig zum Beispiel von dem Land, in dem der Kraftfahrer tätig ist, und/oder von der Klasse des Kraftfahrzeugs - Strafen drohen, was beispielsweise auch bei Zerstörung einer Plombierung des Gehäuses der Fall sein kann. Mit der Erfindung wird dem Kraftfahrer somit die Möglichkeit gegeben, seinen Beruf auch dann weiter auszuüben, wenn der Fahrtschreiber zum Beispiel beim Gerätehersteller oder in einem zugelassenen Werkstattbetrieb repariert wird; ohne die Erfindung würde entweder der Datenträger in dem Gerät verbleiben oder das Gerät, müsste unter möglicherweise erheblicher Strafgefahr geöffnet werden. Die erfindungsgemäße Gehäuseausnehmung mit dem Gehäuseausnehmungsverschluss ist vorzugsweise in einer Gehäusewandung, insbesondere in einem Gehäuseboden oder einem Gehäusedeckel oder einer Gehäuserückwand, des erfindungsgemäßen elektrischen Geräts angeordnet.

Der Datenträger kann beliebig ausgebildet und beispielsweise ein Magnetband oder eine Compact Disc sein. Besonders vorteilhaft insbesondere für eine einfache Handhabbarkeit des Datenträgers und eine hohe Datensicherheit ist es hingegen, wenn gemäß einer Weiterbildung der Erfindung der Datenträger eine Datenkarte, vorzugsweise eine Chipkarte oder Smart Card, ist.

Gemäß einer anderen vorteilhaften Weiterbildung der Erfindung ist die Datenträgeraufnahmevorrichtung eine Lese- und/oder Schreibvorrichtung für den Datenträger, wodurch einerseits der Aufbau des erfindungsgemäßen Geräts vereinfacht werden kann und andererseits durch die Verriegelung des Datenträgers ein zuverlässiger Datenaustausch zwischen Datenträger und Gerät beim Lesen und/oder Schreiben der Daten ermöglicht wird.

Die Herstellung des Geräts kann vorteilhaft erleichtert werden, wenn gemäß der Erfindung der Gehäuseausnehmungsverschluss einen Gehäusebestandteil einer Gehäusewandung des Gehäuses aufweist. Bevorzugt ist der Gehäuseausnehmungsverschluss selbst Gehäusebestandteil.

Der Erfindung entsprechend ist zwischen dem Gehäuseausnehmungsverschluss und einem an den Gehauseausnehmungsverschluss angrenzenden Wandungsbereich der Gehäusewandung zumindest eine Gehäusewandungsdurchbrechung angeordnet. Eine Mehrzahl solcher Gehäusewandungsdurchbrechungen ist eine Perforation der Gehäusewandung bildend vorgesehen. Entlang einer solchen Perforation, die eine Reißlinie bildet, kann der Gehäuseausnehmungsverschluss leicht von dem angrenzenden Wandungsbereich der Gehäusewandung die Gehäuseausnehmung öffnend getrennt werden. Besonders vorteilhaft ist es, dass bei dem erfindungsgemäßen Gerät die Gehäusewandungsdurchbrechung sehr klein gehalten werden kann und so beispielsweise eine Schutzart IP40 des Gehäuses mit der Erfindung erreicht werden kann. Außerdem ist die Gehäusewandungsdurchbrechung einfach und kostengünstig bei der Herstellung der Gehäusewandung mitherstellbar.

Gemäß einer anderen vorteilhaften Weiterbildung der Erfindung ist der Gehäuseausnehmungsverschluss mit dem an den Gehäuseausnehmungsverschluss angrenzenden Wandungsbereich der Gehäusewandung mittels zumindest eines Steges verbunden. Beispielsweise kann mit Hilfe des Steges der geöffnete Gehäuseausnehmungsverschluss weiterhin an dem Gehäuse gehalten werden, wodurch ein unbeabsichtigtes Hineinfallen des Gehäuseausnehmungsverschlusses in das Innere des Gehäuses, was möglicherweise zu einer Beschädigung des Geräts zum Beispiel durch Bildung eines elektrischen Kurzschlusses führen könnte, verhindert wird.

Ein besonders guter Schutz des Inneren des Geräts vor Umwelteinflüssen wie Staub und Feuchtigkeit kann in vorteilhafter Weise erzielt werden, wenn gemäß einer anderen Weiterbildung der Erfindung zwischen dem Gehäuseausnehmungsverschluss und dem an den Gehäuseausnehmungsverschluss angrenzenden Wandungsbereich der Gehäusewandung die Gehäusewandung eine gegenüber einer Wandstärke des Gehäuseausnehmungsverschlusses und einer Wandstärke des angrenzenden Wandungsbereiches reduzierte Wandstärke aufweist. Auf diese Weise kann eine im Bereich des Gehäuseausnehmungsverschlusses vollständig geschlossene Gehäusewandung vorliegen, aus der der Gehäuseausnehmungsverschluss im Bedarfsfall entsprechend beispielsweise dem Öffnen einer Fischdose einfach heraustrennbar ist. Beispielsweise auch im Falle einer oben beschriebenen Perforation kann eine vorgenannte reduzierte Wandstärke von Vorteil sein, um den Gehäuseausnehmungsverschluss leicht von dem angrenzenden Wandungsbereich trennen zu können.

Gemäß einer anderen vorteilhaften Weiterbildung der Erfindung weist der Gehäuseausnehmungsverschluss ein die Gehäuseausnehmung zumindest teilweise überdeckendes Siegel auf. Es ist sowohl denkbar, das Siegel als alleinigen Gehäuseausnehmungsverschluss vorzusehen als auch, das Siegel beispielsweise mit einer oben beschriebenen Perforation des Gehäuses zu kombinieren.

Einen guten Schutz des Siegels vor unbeabsichtigter mechanischer Beschädigung kann man dadurch erreichen, dass entsprechend einer anderen vorteilhaften Weiterbildung der Erfindung das Siegel an der der Datenträgeraufnahmevorrichtung zugewandten Innenseite des Gehäuses angeordnet ist.

Gemäß einer anderen vorteilhaften Weiterbildung der Erfindung kann ein Schutz des Siegels vor mechanischer Beschädigung dadurch erreicht oder zumindest verbessert werden, dass das Siegel in einer Gehäusevertiefung angeordnet ist. Eine derartige Anordnung ist insbesondere dann von Vorteil, wenn sich das Siegel an der der Datenträgeraufnahmevorrichtung abgewandten Außenseite des Gehäuses befindet, da in diesem Fall eine erhöhte Beschädigungsgefahr des Siegels zum Beispiel bei einem Einbau des erfindungsgemäßen Geräts in ein Kraftfahrzeug besteht.

Ein vorteilhaft einfaches Entriegeln des Datenträgers kann gemäß einer anderen Weiterbildung der Erfindung dadurch erreicht werden, dass durch die Gehäuseausnehmung, vorzugsweise unmittelbar, auf ein, vorzugsweise beliebiges, Getriebeglied, das zum Beispiel eines von verschiedenen Zahnrädern in einem Zahnradgetriebe sein kann, eines Getriebes zum Antrieb der Datenträgerverriegelungseinrichtung zugegriffen werden kann, so dass durch entsprechende Bewegung des Getriebegliedes, vorzugsweise mittels eines geeigneten Werkzeugs, der Datenträger entriegelbar ist.

Ein sehr einfaches Entriegeln des Datenträgers und gleichzeitig eine Möglichkeit, die Nutzung der geöffneten Gehäuseausnehmung noch zuverlässiger auf den vorgesehenen Zweck des Entriegelns des Datenträgers durch ein Vorsehen einer möglichst kleinen Öffnungsfläche der Gehäuseausnehmung zu beschränken, kann gemäß einer anderen Weiterbildung der Erfindung besonders vorteilhaft dadurch erreicht werden, dass die Datenträgeraufnahmevorrichtung ein Antriebsritzel zu einem Betätigen der Datenträgerverriegelungseinrichtung aufweist und dass durch die Gehäuseausnehmung unmittelbar auf das Antriebsritzel zugegriffen werden kann. Insbesondere dann, wenn das Antriebsritzel direkt auf einer Motorwelle eines die Datenträgerverriegelungseinrichtung antreibenden Motors angeordnet ist, ergibt sich dabei der weitere Vorteil, dass ein Selbsthaltemoment des Motors besonders leicht überwunden werden kann. Das Antriebsritzel ist vorzugsweise ein erstes Getriebeglied eines Getriebes zum Antrieb der Datenträgerverriegelungseinrichtung.

Die oben zweitgenannte Aufgabe wird mit einem Verfahren der eingangs genannten Art und erfindungsgemäß gelöst mit der Gesamtheit der Merkmale des Anspruchs 11.

Durch das Entfernen des Gehäuseausnehmungsverschlusses von der Gehäuseausnehmung wird diese geöffnete; da die geöffnete Gehäuseausnehmung mit dem entfernten Gehäuseausnehmungsverschluss erfindungsgemäß nicht wiederverschließbar ist, ist das Öffnen der Gehäuseausnehmung dauerhaft erkennbar. Vorteilhaft kann das für das erfindungsgemäße Verfahren zu verwerdende Werkzeug ein Handwerkzeug, in sehr einfacher Weise beispielsweise ein Schraubendreher oder ein Schreibstift wie zum Beispiel ein Kugelschreiber, sein. Ein Entriegeln des Datenträgers wird nach dem erfindungsgemäßen verfahren in einen Datenspeicher des Geräts eingetragen und somit elektronisch dokumentiert.

Man könnte sich vorstellen, dass das Werkzeug zum Entriegeln des Datenträgers geradlinig bewegt wird, zum Beispiel in einer schlitzförmigen Gehäuseausnehmung linear verschoben oder geradlinig in eine Gehäuseausnehmung hineingestoßen wird. Hingegen kann die zur Betätigung der Datenträgerverriegelungseinrichtung über das Werkzeug aufzubringende Kraft besonders gut dcsiert werden, wenn gemäß der Erfindung das Werkzeug zum Entriegeln des Datenträgers drehend, das heißt auf einer Kreisbahn und/oder rotatorisch um eine werkzeugeigene Achse, bewegt wird.

Sehr leicht und einfach kann das Entriegeln des Datenträgers vonstatten gehen, wenn gemäß einer anderen vorteilhaften Weiterbildung der Erfindung das Werkzeug mit einem die Datenträgerverriegelungseinrichtung betätigenden Antriebsritzel der Datenträgeraufnahmevorrichtung in Eingriff gebracht und der Datenträger durch Drehen des Werkzeugs entriegelt wird.

Beispielsweise wäre es denkbar, den Datenträger nach dem Entriegeln zum Beispiel mit einer Zange oder eine= Pinzette aus dem Gehäuse herauszuziehen. Jedoch kann ein wesentlich vereinfachter Zugriff auf den Datenträger - zum Beispiel durch die Hand einer Bedienperson - erfolgen, wenn gemäß einer anderen vorteilhaften Weiterbildung der Erfindung der Datenträger während des Entriegelns oder nach dem Entriegeln zumindest teilweise aus dem Gehäuse hinausgeführt wird.

Ausführungsbeispiele der Erfindung sind in beiliegender schematisierter Zeichnung dargestellt und werden im Folgenden näher beschrieben. In der Zeichnung zeigen
- Figur 1: ein elektrisches Gerät in einer perspektivischen Ansicht von unten,
- Figur 2: ein vergrößertes Detail aus Figur 1,
- Figur 3: eine Datenträgeraufnahmevorrichtung des Gerätes nach Figur 1 und einen Datenträger in einer perspektivischen Ansicht von oben,
- Figur 4: einen Ausschnitt der Datenträgeraufnahmevorrichtung nach Figur 3 mit einem verriegelten Datenträger in einer Draufsicht,
- Figur 5: das Gerät nach Figur 1 in einer perspektivischen Schnittansicht von unten,
- Figur 6: ein vergrößertes Detail aus Figur 5,
- Figur 7: einen Ausschnitt des Gerätes nach Figur 1 mit einer geöffneten Gehäuseausnehmung in einer geschnittenen Seitenansicht,
- Figur 8: eine Gehäusewandung eines anderen elektrischen Gerätes,
- Figur 9: eine Gehäusewandung eines weiteren elektrischen Gerätes in einer ersten perspektivischen Ansicht,
- Figur 10: die Gehäusewandung nach Figur 9 in einer zweiten perspektivischen Ansicht und
- Figur 11: einen Ausschnitt einer Gehäusewandung eines weiteren elektrischen Gerätes in einer Schnittansicht.

Sich jeweils entsprechende Elemente sind in allen Figuren mit gleichen Bezugszeichen versehen.

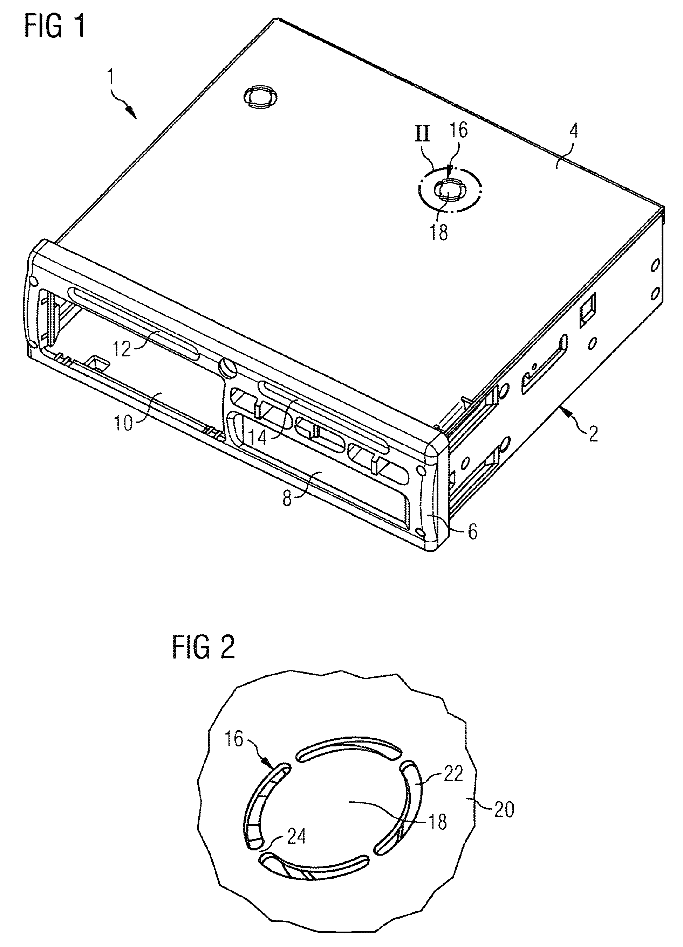

Figur 1 zeigt ein als Einbaugerät, und zwar als digitaler Fahrtschreiber, für ein Kraftfahrzeug, insbesondere ein Nutzfahrzeug, ausgebildetes elektrisches Gerät 1 mit einem Gehäuse 2. Das Gehäuse 2 weist unter anderem eine erste Gehäusewandung 4 in Form eines Gehäusebodens und eine zweite Gehäusewandung 6 in Form einer Frontblende mit einer hier nicht dargestellten Plombierung des Gehäuses 2 auf. Die Frontblende ist mit einer Öffnung 8 für eine Anzeigeeinheit und einer Öffnung 10 für eine Druckereinheit des Fahrtschreibers versehen, wobei Anzeigeeinheit und Druckereinheit hier nicht weiter dargestellt sind. Außerdem weist die Frontblende zwei Einführschlitze 12, 14 für jeweils als Datenkarte ausgebildete Datenträger auf. Korrespondierend mit den Einführschlitzen 12, 14 sind in dem Gehäuse 2 zwei Datenträgeraufnahmevorrichtungen angeordnet.

Weiterhin weist das Gehäuse 1 in dem Gehäuseboden eine einer ersten Datenträgeraufnahmevorrichtung der beiden Datenträgeraufnahmevorrichtungen zugeordnete Gehäuseausnehmung 16 mit einem Gehäuseausnehmungsverschluss 18 auf. Auch der zweiten Datenträgeraufnahmevorrichtung ist eine entsprechende Gehäuseausnehmung mit einem Gehäuseausnehmungsverschluss zugeordnet.

Zur weiteren Verdeutlichung ist die der ersten Datenträgeraufnahmevorrichtung zugeordnete Gehäuseausnehmung 16 mit dem Gehäuseausnehmungsverschluss 18 als Detail II aus Figur 1 in Figur 2 vergrößert dargestellt. Es ist zu erkennen, dass der Gehäuseausnehmungsverschluss 18 in diesem Ausführungsbeispiel ein Gehäusebestandteil der ersten Gehäusewandung 4, nämlich des Gehäusebodens, des Gehäuses 1 ist.

Zwischen dem Gehäuseausnehmungsverschluss 18 und einem an den Gehäuseausnehmungsverschluss 18 angrenzenden Wandungsbereich 20 der ersten Gehäusewandung 4 sind vier Gehäusewandungsdurchbrechungen 22 angeordnet. Die Gehäusewandungsdurchbrechungen 22 können beispielsweise aus der ersten Gehäusewandung 4, bei der es sich insbesondere um ein Blechbauteil handeln kann, ausgestanzt sein.

Der Gehäuseausnehmungsverschluss 18 ist mit dem an den Gehäuseausnehmungsverschluss 18 angrenzenden Wandungsbereich 20 der ersten Gehäusewandung 4 mittels Stegen 24 verbunden. Die Stege 24 trennen die Gehäusewandungsdurchbrechungen 22 voneinander, so dass die Gehäusewandungsdurchbrechungen 22 eine Perforation der ersten Gehäusewandung 4 bilden. Entlang der Perforation ist der Gehäuseausnehmungsverschluss 18 die Gehäuseausnehmung 16 freigebend aus der ersten Gehäusewandung 4 ausbrechbar. Durch die Gehäuseausnehmung 16 hindurch ist ein Zugriff von außerhalb des Gehäuses 2 auf die oben genannte zugeordnete, in dem Gehäuse 2 angeordnete Datenträgeraufnahmevorrichtung möglich.

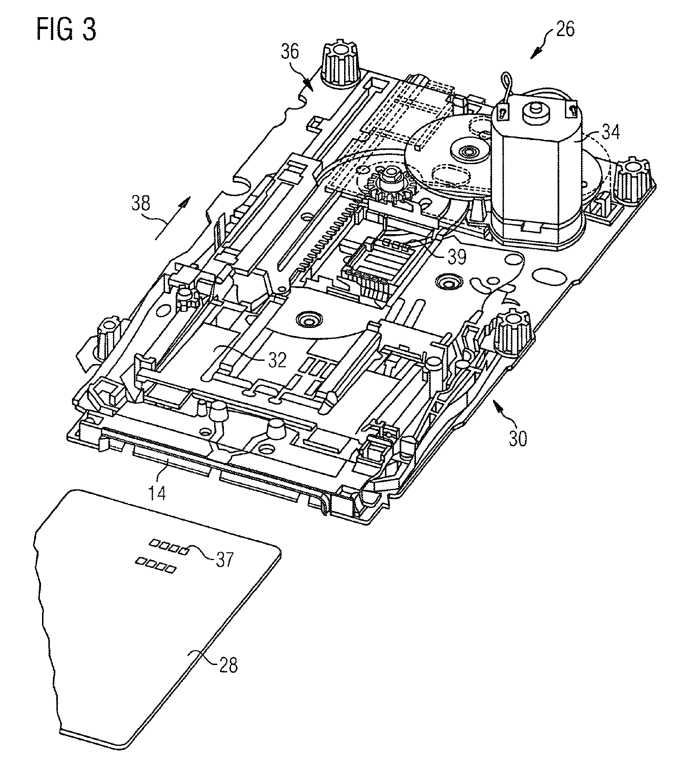

Diese Datenträgeraufnahmevorrichtung 26 ist in Figur 3 im einzelnen und zusammen mit einem als Datenkarte, vorzugsweise als Chipkarte oder Smart Card, ausgebildeten Datenträger 28, der insbesondere auf einen Kraftfahrer personenbezogen ist, dargestellt. Die Datenträgeraufnahmevorrichtung 26 weist eine Datenträgerverriegelungseinrichtung 30 zum Verriegeln des Datenträgers 28, wenn dieser in seiner Endlage in der Datenträgeraufnahmevorrichtung 26 angeordnet ist, auf. In der verriegelten Endlage des Datenträgers 28 in der Datenträgeraufnahmevorrichtung 26, die hier als Lese- und Schreibvorrichtung für den Datenträger 28 ausgebildet ist, ist ein Datenaustausch zwischen Datenträger 28 und Fahrtschreiber möglich.

Dazu wird der Datenträger 28 durch den korrespondierenden Einführschlitz 14 (siehe auch Figur 1) in das Gehäuse auf einen Schlitten 32 der Datenträgeraufnahmevorrichtung 26 eingeschoben. Der Schlitten 32 transportiert - in diesem Ausführungsbeispiel angetrieben über ein Getriebe 36 von einem als Getriebemotor ausgebildeten Elektromotor 34 - den Datenträger 28 in Richtung eines ersten Pfeils 38 vollständig in das Gehäuse hinein bis in die Endlage des Datenträgers 28, in der Kontaktflächen 37 des Datenträgers 28 mit Kontakten 39 der Datenträgeraufnahmevorrichtung 26 kontaktiert sind.

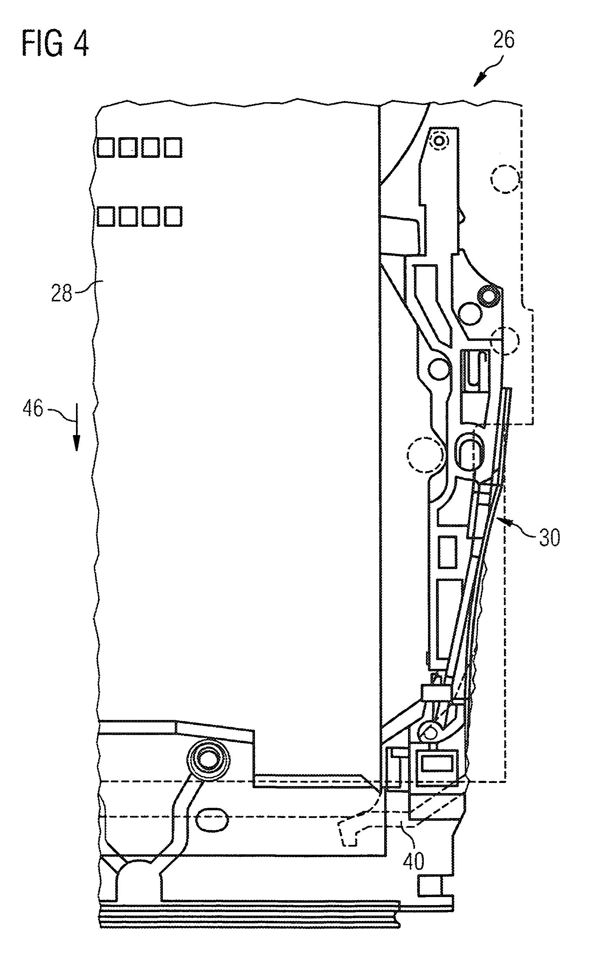

In dieser Endlage befindet sich der Datenträger 28 in einer Darstellung nach Figur 4. Es ist zu erkennen, dass der Datenträger 28 in dieser Lage mittels der Datenträgerverriegelungseinrichtung 30, und zwar insbesondere mittels eines Verriegelungselements 40 der Datenträgerverriegelungseinrichtung 30, verriegelt ist. Die Datenträgerverriegelungseinrichtung 30 wird ebenfalls von dem Elektromotor 34 und über das Getriebe 36 angetrieben.

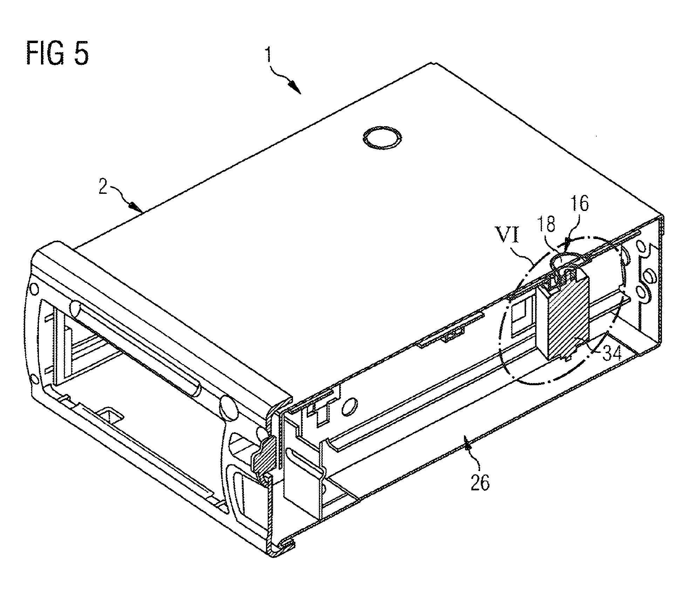

Aus Figur 5, die in einer Ansicht von unten eine Schnittansicht des Gerätes 1 zeigt, ist entnehmbar, dass die Gehäuseausnehmung 16 unmittelbar unterhalb des die Datenträgerverriegelungseinrichtung antreibenden Elektromotors 34 der in dieser Ansicht nicht vollständig dargestellten Datenträgeraufnahmevorrichtung 26 angeordnet ist.

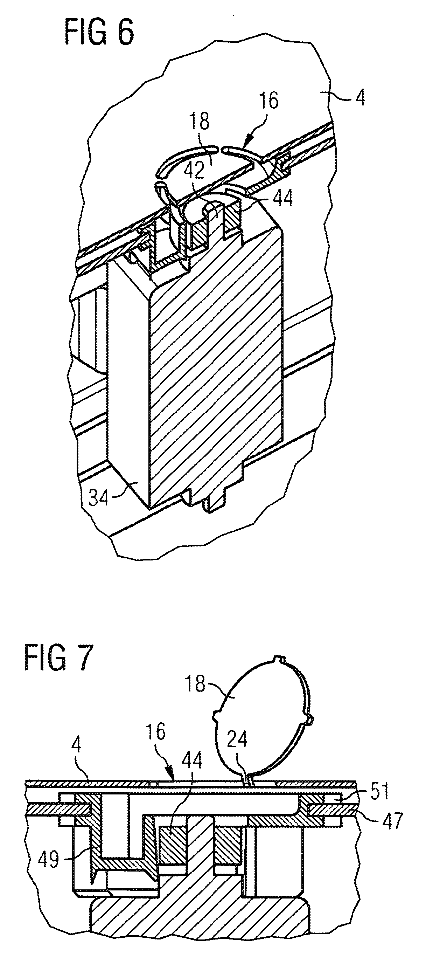

Figur 6, die ein vergrößertes Detail VI aus Figur 5 darstellt, lässt erkennen, dass auf einer Motorwelle 42 des Elektromotors 34 ein Antriebsritzel 44 angeordnet ist. Über das Antriebsritzel 44 wird die Datenträgerverriegelungseinrichtung angetrieben und betätigt. Das Antriebsritzel 44 befindet sich direkt oberhalb des Gehäuseausnehmungsverschlusses 18 der Gehäuseausnehmung 16.

Einen Zugriff von außerhalb des Gehäuses 2 auf die Datenträgeraufnahmevorrichtung 26 zu einem Entriegeln des in der Datenträgeraufnahmevorrichtung 26 verriegelten Datenträgers 28 ermöglicht die Gehäuseausnehmung 16 mit dem Gehäuseausnehmungsverschluss 18 (siehe Figuren 4 bis 6). Für den Zugriff ist der Gehäuseausnehmungsverschluss 18 von der Gehäuseausnehmung 16 entfernbar, wodurch die Gehäuseausnehmung 16 geöffnet wird (Figur 7). Es ist danach dauerhaft erkennbar, dass ein Öffnen der Gehäuseausnehmung 16 erfolgt ist, da der Gehäuseausnehmungsverschluss 18 ausschließlich nicht wiederverschließbar von der Gehäuseausnehmung 16 entfernbar ist. In diesem Ausführungsbeispiel geschieht das dadurch, dass der Gehäuseausnehmungsverschluss 10 die Gehäuseausnehmung 16 öffnend aus der ersten Gehäusewandung 4 - zum Beispiel mittels eines Hebelwerkzeugs, beispielsweise eines Schraubendrehers - herausgebrochen wird. Durch die geöffnete Gehäuseausnehmung 16 kann unmittelbar auf das Antriebsritzel 44 zugegriffen werden.

Von Vorteil ist es, wenn der Gehäuseausnehmungsverschluss 18 unverlierbar von der Gehäuseausnehmung 16 entfernbar ist. Das wird hier dadurch erreicht, dass drei der vier Stege 24 durchtrennt werden, mittels des vierten Steges aber eine Verbindung zwischen Gehäuseausnehmungsverschluss 18 und Gehäusewandung 4 bestehen bleibt. Es kann auch vorgesehen sein, dass dieser Steg, der den Gehäuseausnehmungsverschluss 18 und die Gehäusewandung 4 auch nach dem Öffnen der Gehäuseausnehmung 16 verbunden hält, größer, insbesondere breiter, ausgebildet ist als die anderen Stege, die durchtrennt werden.

Entriegelt wird der Datenträger 28 auf folgende Weise: Zuerst wird der Gehäuseausnehmungsverschluss 18 von der Gehäuseausnehmung 16 entfernt; dies erfolgt nicht wiederverschließbar. Danach wird ein Werkzeug, vorzugsweise ein Handwerkzeug, durch die Gehäuseausnehmung 16 in das Gehäuse 2 eingeführt und mit der Datenträgeraufnahmevorrichtung 26, und zwar in diesem Ausführungsbeispiel unmittelbar mit dem Antriebsritzel 44 der Datenträgeraufnahmevorrichtung 26, in Eingriff gebracht. Als Werkzeug kann beispielsweise ein Stift oder ein Schraubendreher benutzt werden. Nachfolgend wird mittels des Werkzeugs über das Antriebsritzel 44 die Datenträgerverriegelungseinrichtung 30 der Datenträgeraufnahmevorrichtung 26 betätigt, wodurch der Datenträger 28 in der Datenträgeraufnahmevorrichtung 26 entriegelt wird. Zur Betätigung der Datenträgerverriegelungseinrichtung 30 wird das Werkzeug - dadurch das Antriebsritzel 44 rotatorisch antreibend - drehend bewegt. Das Entriegeln erfolgt in diesem Ausführungsbeispiel dadurch, dass das Verriegelungselement 40 zurückschwenkt und damit den Datenträger für eine Bewegung in Richtung eines aus dem Gehäuse hinausweisenden Pfeils 46 freigibt (Figur 4). Abschließend, nach dem Entriegeln, wird der Datenträger 28 durch Bewegung des Schlittens 32 (Figur 3), der über das Antriebsritzel 44 und das Getriebe 36 angetrieben wird, aus dem Gehäuse 2 hinausgeführt, und zwar mindestens so weit, bis er von einer Bedienperson ergriffen und vollständig aus dem Gerät 1 herausgezogen werden kann.

Durch das Entfernen (hier: Ausbrechen) des Gehäuseausnehmungsverschlusses 18 von der Gehäuseausnehmung 16 ist der Gehäuseboden irreparabel beschädigt. Eine dadurch notwendig gewordene Reparatur kann zum Beispiel in einem zugelassenen Werkstattbetrieb durchgeführt werden. Währenddessen steht aber der aus dem Gerät 1 entnommene Datenträger 28 für weitere Fahrten des Kraftfahrers zur Verfügung.

Von besonderem Vorteil ist bei dem hier gezeigten Ausführungsbeispiel (siehe Figuren 5, 7), dass unmittelbar über der den Gehäuseboden bildenden ersten Gehäusewandung 4 eine stabile Platte 47, zum Beispiel eine Stahlplatte, in dem Gehäuse 2 angeordnet ist. Dadurch wird zusätzlich sichergestellt, dass durch das Entfernen des - an sich schon lediglich geringe Abmessungen aufweisenden - Gehäuseausnehmungsverschlusses 18 von der Gehäuseausnehmung 16 unter dem Antriebsritzel 44 kein weiterer Zugang in das Innere des Gehäuses 2, insbesondere auf eine dort angeordnete Systemleiterplatte, möglich ist. Außerdem ist eine Motoraufnahme 49, in der das Antriebsritzel 44 sitzt, mit einem Bund 51 zum von der ersten Gehäusewandung 4 gebildeten Gehäuseboden hin versehen. Aufgrund des Bundes 51 ist ein seitliches Eindringen in das Gerät 1 durch die Gehäuseausnehmung 16 hindurch nur sehr erschwert möglich.

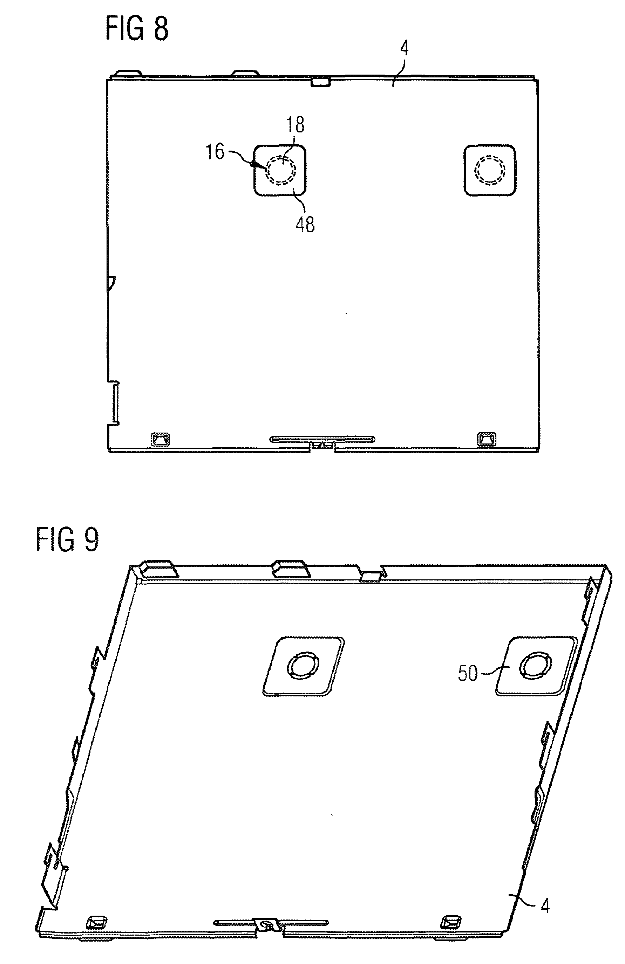

Figur 8 zeigt eine einer Datenträgeraufnahmevorrichtung zugewandte Innenseite einer ersten, als Gehäuseboden ausgebildeten Gehäusewandung 4 eines hier nicht weiter gezeigten elektrischen Geräts, das im übrigen dem oben beschriebenen Gerät 1 nach Figuren 1 bis 7 entspricht. Entsprechend sind auch Gehäuseausnehmungen 16 mit Gehäuseausnehmungsverschlüssen 18 ausgebildet. Zusätzlich weisen die Gehäuseausnehmungsverschlüsse 18 hier noch Siegel 48 auf, wobei jeweils eines der Siegel 48 eine der Gehäuseausnehmungen 16 überdeckt und an der Gehäusewandung 4 befestigt, insbesondere verklebt, ist.

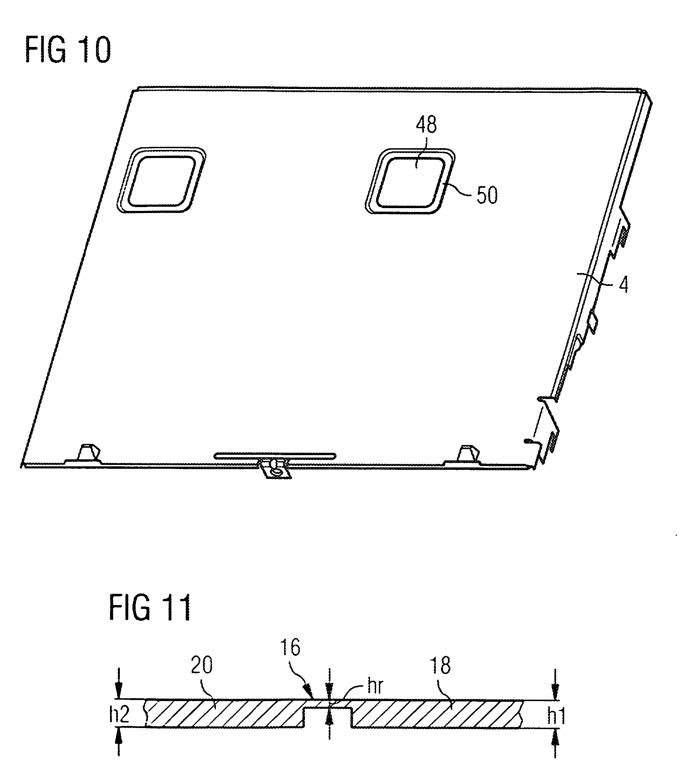

Eine weitere, der Ausführungsform nach Figur 8 ähnliche Variante zeigen Figuren 9 und 10. Hier weist eine erste, als Gehäuseboden ausgebildete Gehäusewandung 4 eines elektrischen Gerätes 1 wie es ansonsten oben nach Figuren 1 bis 7 beschrieben ist zusätzlich Gehäusevertiefungen 50 auf, in welchen Gehausevertiefungen 50 jeweils ein Siegel 48 angeordnet ist. Von den Figuren 9, 10 zeigt Figur 9 eine einer Datenträgeraufnahmevorrichtung zugewandte Innenseite und Figur 10 eine der Datenträgeraufnahmevorrichtung abgewandte Außenseite der ersten Gehausewandung 4. Die Siegel 48 sind von außen auf der ersten Gehausewandung 4 befestigt und werden durch die Gehäusevertiefungen 50 geschützt.

Bei den Variante nach Figuren 8 bis 10 ist es auch denkbar, dass die Gehauseausnehmungsverschlüsse 18 ausschließlich von jeweile einem der Siegel 48 gebildet werden.

Figur 11 zeigt einen Ausschnitt einer ersten Gehäusewandung mit einer Gehauseausnehmung 16 eines im übrigen wie das nach Figuren 1 bis 7 beschriebene Gerät 1 ausgebildeten elektrischen Geräts, wobei zwischen einem Gehäuseausnehmungsverschluss 18 und einem an den Gehäuseausnehmungsverschluss 18 angrenzenden Wandungsbereich 20 der Gehäusewandung die Gehäusewandung eine gegenüber einer Wandstärke h1 des Gehäuseausnehmungsverschlusses 18 und einer Wandstärke h2 des angrenzenden Wandungsbereiches 20 reduzierte Wandstärke hr aufweist. Die Wandstärke h1 des Gehäuseausnehmungsverschlusses 18 und die Wandstärke h2 des angrenzenden Wandungsbereiches 20 können vorzugsweise die gleiche Größe aufweisen.

## Patentansprüche

1. Elektrisches Gerät (1), insbesondere Einbaugerät für ein Fahrzeug, mit einem Gehäuse und mit einer in dem Gehäuse angeordneten Datenträgeraufnahmevorrichtung, wobei die Datenträgeraufnahmevorrichtung eine Datenträgerverriegelungseinrichtung zum Verriegeln eines in der Datenträgeraufnahmevorrichtung angeordneten Datenträgers aufweist,
wobei das Gehäuse (2) eine einen Zugriff von außerhalb des Gehäuses (2) auf die Datenträgeraufnahmevorrichtung (26) zu einem Entriegeln des in der Datenträgeraufnahmevorrichtung (26) verriegelten Datenträgers (28) ermöglichende Gehäuseausnehmung (16) und einen zu einem Öffnen der Gehäuseausnehmung (16) nicht wiederverschließbar von der Gehäuseausnehmung (16) entfernbaren, zum ausschließlich einmaligen Öffnen der Gehäuseausnehmung (16) vorgesehenen Gehäuseausnehmungsverschluss (18) aufweist,
wobei der Gehäuseausnehmungsverschluss (18) einen Gehäusebestandteil einer Gehäusewandung (4) des Gehäuses (2) aufweist,
wobei zwischen dem Gehäuseausnehmungsverschluss (18) und einem an den Gehäuseausnehmungsverschluss (18) angrenzenden Wandungsbereich (20) der Gehäusewandung (4) zumindest eine Gehäusewandungsdurchbrechung (22) angeordnet ist,
wobei eine Mehrzahl solcher Gehäusewandungsdurchbrechungen eine Perforation der Gehäusewandung bildend vorgesehen ist.

2. Gerät nach Anspruch 1, **dadurch, gekennzeichnet, dass** der Datenträger (28) eine Datenkarte ist.

3. Gerät nach Anspruch 1 oder 2, **dadurch gekennzeichnet, dass** die Datenträgeraufnahmevorrichtung (26) eine Lese- und/oder Schreibvorrichtung für den Datenträger (28) ist.

4. Gerät nach einem der vorhergehenden Ansprüche, **dadurch gekennzeichnet, dass** der Gehäuseausnehmungsverschluss (18) mit dem an den Gehäuseausnehmungsverschluss (18) angrenzenden Wandungsbereich (20) der Gehäusewandung (4) mittels zumindest eines Steges (24) verbunden ist.

5. Gerät nach einem der vorhergehenden Ansprüche, **dadurch gekennzeichnet, dass** zwischen dem Gehäuseausnehmungsverschluss (18) und dem an den Gehäuseausnehmungsverschluss (18) angrenzenden Wandungsbereich (20) der Gehäusewandung (4) die Gehäusewandung (4) eine gegenüber einer Wandstärke (h1) des Gehäuseausnehmungsverschlusses (18) und einer Wandstärke (h2) des angrenzenden Wandungsbereiches (20) reduzierte Wandstärke (hr) aufweist.

6. Gerät nach einem der vorhergehenden Ansprüche, **dadurch gekennzeichnet, dass** der Gehäuseausnehmungsverschluss (18) ein die Gehäuseausnehmung (16) zumindest teilweise überdeckendes Siegel (48) aufweist.

7. Gerät nach Anspruch 6, **dadurch gekennzeichnet, dass** das Siegel (48) an der der Datenträgeraufnahmevorrichtung (26) zugewandten Innenseite des Gehäuses (2) angeordnet ist.

8. Gerät nach Anspruch 6 oder 7, **dadurch gekennzeichnet, dass** das Siegel (48) in einer Gehäusevertiefung (50) angeordnet ist.

9. Gerät nach einem der vorhergehenden Ansprüche, d a - **durch gekennzeichnet,** dass durch die Gehäuseausnehmung (16) auf ein Getriebeglied eines Getriebes (36) zum Antrieb der Datenträgerverriegelungseinrichtung (30) zugegriffen werden kann.

10. Gerät nach einem der vorhergehenden Ansprüche, **dadurch gekennzeichnet , dass** die Datenträgeraufnahmevorrichtung (26) ein Antriebsritzel (44) zu einem Betätigen der Datenträgerverriegelungseinrichtung (30) aufweist und dass durch die Gehäuseausnehmung (16) unmittelbar auf das Antriebsritzel (44) zugegriffen werden kann.

11. Verfahren zum Entriegeln eines im einer eine Datenträgerverriegelungseinrichtung (30) aufweisenden Datenträgeraufnahmevorrichtung (26) verriegelten Datenträgers (28) in einem elektrischen Gerät (1) nach einem der vorhergehenden Ansprüche mit einem eine Gehäuseausnehmung und einen Gehäuseausnehmungsverschluss aufweisenden Gehäuse,
- wobei der Gehäuseausnehmungsverschluss (18) von der Gehäuseausnehmung (16) nicht wiederverschließbar entfernt wird,
- wobei ein Werkzeug durch die geöffnete Gehäuseausnehmung (16) in das Gehäuse (2) eingeführt und mit der Datenträgeraufnahmevorrichtung (26) in Eingriff gebracht wird,
- wobei mittels des Werkzeugs die Datenträgerverriegelungseinrichtung (30) betätigt und der Datenträger (28) in der Datenträgeraufnahmevorrichtung (26) entriegelt wird,
- wobei das Werkzeug zum Entriegeln des Datenträgers (28) drehend bewegt wird und
- wobei das Entriegeln des Datenträgers (28) in einen Datenspeicher des Geräts eingetragen wird.

12. Verfahren nach Anspruch 11, **dadurch gekennzeichnet, dass** das Werkzeug mit einem die Datenträgerverriegelungseinrichtung (30) betätigenden Antriebsritzel (44) der Datenträgeraufnahmevorrichtung (26) in Eingriff gebracht und der Datenträger (28) durch Drehen des werkzeugs entriegelt wird.

13. Verfahren nach einem der Ansprüche 11 bis 12, **dadurch gekennzeichnet, dass** der Datenträger (28) während des Entriegelns oder nach dem Entriegeln zumindest teilweise aus dem Gehäuse (2) hinausgeführt wird.

## Claims

1. Electrical device (1), in particular a built-in device for a vehicle, having a housing and having a data medium holding apparatus arranged in the housing, the data medium holding apparatus having a data medium locking device for the purpose of locking a data medium arranged in the data medium holding apparatus, the housing (2) having a housing recess (16), which enables access from outside the housing (2) to the data medium holding apparatus (26) for the purpose of unlocking the data medium (28) locked in the data medium holding apparatus (26), and a housing recess closure (18), for the purpose of opening the housing recess (16) strictly only once, that can be removed from the housing recess (16) in a non-relockable fashion for the purpose of opening the housing recess (16), the housing recess closure (18) having a housing component of a housing wall (4) of the housing (2), at least one housing wall opening (22) being arranged between the housing recess closure (18) and a wall region (20) of the housing wall (4) bordering the housing recess closure (18), a plurality of such housing wall openings being provided in a fashion forming a perforation of the housing wall.

2. Device according to Claim 1, **characterized in that** the data medium (28) is a data card.

3. Device according to Claim 1 or 2, **characterized in that** the data medium holding apparatus (26) is a read and/or write apparatus for the data medium (28).

4. Device according to one of the preceding claims, **characterized in that** the housing recess closure (18) is connected by means of at least one web (24) to the wall region (20) of the housing wall (4) bordering the housing recess closure (18).

5. Device according to one of the preceding claims, **characterized in that** between the housing recess closure (18) and the wall region (20) of the housing wall (4) bordering the housing recess closure (18) the housing wall (4) has a wall thickness (hr) reduced by comparison with a wall thickness (h1) of the housing recess closure (18) and a wall thickness (h2) of the bordering wall region (20).

6. Device according to one of the preceding claims, **characterized in that** the housing recess closure (18) has a seal (48) at least partially covering the housing recess (16).

7. Device according to Claim 6, **characterized in that** the seal (48) is arranged on the inside of the housing (2) facing the data medium holding apparatus (26).

8. Device according to Claim 6 or 7, **characterized in that** the seal (48) is arranged in a housing depression (50).

9. Device according to one of the preceding claims, **characterized in that** a drive element of a drive (36) for driving the data medium locking device (30) can be accessed through the housing recess (16).

10. Device according to one of the preceding claims, **characterized in that** the data medium holding apparatus (26) has a driving pinion (44) for actuating the data medium locking device (30), and **in that** it is possible to access the driving pinion (44) directly through the housing recess (16).

11. Method for unlocking a data medium (28), locked in a data medium holding apparatus (26) having a data medium locking device (30), in an electrical device (1) according to one of the preceding claims, having a housing having a housing recess and a housing recess closure,
- the housing recess closure (18) being removed from the housing recess (16) in a non-relockable fashion,
- a tool being introduced into the housing (2) through the open housing recess (16) and being brought into engagement with the data medium holding apparatus (26),
- the tool being used to actuate the data medium locking device (30) and to unlock the data medium (28) in the data medium holding apparatus (26),
- the tool being rotated for the purpose of unlocking the data medium (28), and
- the unlocking of the data medium (28) being entered into a data memory of the device.

12. Method according to Claim 11, **characterized in that** the tool is brought into engagement with a driving pinion (44), actuating the data medium locking device (30), of the data medium holding apparatus (26), and the data medium (28) is unlocked by rotating the tool.

13. Method according to one of Claims 11 to 12, **characterized in that** the data medium (28) is guided at least partially out of the housing (2) while or after being unlocked.

## Revendications

1. Appareil (1) électrique, notamment appareil incorporé pour un véhicule, comprenant un boîtier et un dispositif de réception d'un support de données disposé dans le boîtier, le dispositif de réception de support de données ayant un dispositif de verrouillage de support de données pour verrouiller un support de données disposé dans le dispositif de réception de support de données,
dans lequel le boîtier (2) a un évidement (16) permettant un accès de l'extérieur du boîtier (2) au dispositif (26) de réception de support de données, pour un déverrouillage du support (28) de données, verrouillé dans le dispositif (26) de réception de support de données, et une fermeture (18) de l'évidement du boîtier qui, pour l'ouverture de l'évidement (16) du boîtier, peut être, sans pouvoir être refermé, retiré de l'évidement (16) du boîtier et qui est prévu pour l'ouverture exclusivement une fois de l'évidement (16) du boîtier,
dans lequel entre la fermeture (18) de l'évidement du boîtier et une zone (20) de la paroi (4) du boîtier voisine de la fermeture (18) de l'évidement du boîtier est disposée au moins une traversée (22) de la paroi du boîtier,
dans lequel il est prévu une multiplicité de traversées de la paroi du boîtier de ce genre formant une perforation de la paroi du boîtier.

2. Appareil suivant la revendication 1, **caractérisé en ce que** le support (28) de données est une carte de données.

3. Appareil suivant la revendication 1 ou 2, **caractérisé en ce que** le dispositif (26) de réception de support de données est un dispositif de lecture et/ou d'écriture pour le support (28) de données.

4. Appareil suivant l'une des revendications précédentes, **caractérisé en ce que** la fermeture (18) de l'évidement du boîtier est reliée à la zone (20) de la paroi (4) du boîtier voisine de la fermeture (18) de l'évidement du boîtier au moyen d'au moins une nervure (24).

5. Appareil suivant l'une des revendications précédentes, **caractérisé en ce qu'**entre la fermeture (18) de l'évidement du boîtier et la zone (20) de la paroi (4) du boîtier voisine de la fermeture (18) de l'évidement du boîtier, la paroi (4) du boîtier a une épaisseur (hr) de paroi réduite par rapport à une épaisseur (h1) de paroi de la fermeture (18) de l'évidement du boîtier et par rapport à une épaisseur (h2) de paroi de la zone (20) de paroi voisine.

6. Appareil suivant l'une des revendications précédentes, **caractérisé en ce que** la fermeture (18) de l'évidement du boîtier a un cachet (48) recouvrant au moins en partie l'évidement (16) du boîtier.

7. Appareil suivant la revendication 6, **caractérisé en ce que** le cachet (48) est placé sur le côté intérieur du boîtier (2), tourné vers le dispositif (26) de réception du support de données.

8. Appareil suivant la revendication 6 ou 7, **caractérisé en ce que** le cachet (48) est placé dans une cavité (50) du boîtier.

9. Appareil suivant l'une des revendications précédentes, **caractérisé en ce que** par l'évidement (16) du boîtier on peut accéder à un élément d'une transmission (36), pour l'entraînement du dispositif (30) de verrouillage du support de données.

10. Appareil suivant l'une des revendications précédentes, **caractérisé en ce que** le dispositif (26) de réception du support de données a un pignon (44) d'entraînement pour un actionnement du dispositif (30) de verrouillage du support de données et **en ce que** l'on peut accéder directement au pignon (44) d'entraînement par l'évidement (16) du boîtier.

11. Procédé de déverrouillage d'un support (28) de données verrouillé dans un dispositif (26) de réception de support de données ayant un dispositif (30) de verrouillage de support de données dans un appareil (1) électrique suivant l'une des revendications précédentes, comprenant un boîtier ayant un évidement et une fermeture de l'évidement,
- dans lequel on retire, sans possibilité de la refermer, la fermeture (18) de l'évidement (16) du boîtier,
- dans lequel on introduit un outil dans le boîtier (2) par l'évidement (16) du boîtier qui est ouvert et on le met en prise avec le dispositif (26) de réception du support de données,
- dans lequel on actionne au moyen de l'outil le dispositif (30) de verrouillage du support de données et l'on déverrouille le support (28) de données dans le dispositif (26) de réception du support de données,
- dans lequel on fait tourner l'outil pour déverrouiller le support (28) de données et
- dans lequel on inscrit le déverrouillage du support (28) de données dans une mémoire de données de l'appareil.

12. Procédé suivant la revendication 11, **caractérisé en ce que** l'on met l'outil en prise avec un pignon (44) d'entraînement du dispositif (26) de réception du support de données actionnant le dispositif (30) de verrouillage du support de données et on déverrouille le support (28) de données en faisant tourner l'outil.

13. Appareil suivant l'une des revendications 11 à 12, **caractérisé en ce que** l'on sort au moins en partie du boîtier (2) le support (28) de données pendant le déverrouillage ou après le déverrouillage.
